# EUROPÄISCHE PATENTSCHRIFT

(11) **EP 1 114 971 B1**
(45) Veröffentlichungstag und Bekanntmachung des Hinweises auf die Patenterteilung: **16.03.2005**
(21) Anmeldenummer: 00128307.6
(22) Anmeldetag: 22.12.2000
(51) Int. Cl.: F25D 17/02, B23Q 11/14

(54) **Kühleinrichtung**
Refrigerating appliance
Dispositif de refroidissement

(30) Priorität: 07.01.2000 DE 10000331
(43) Veröffentlichungstag der Anmeldung: 11.07.2001
(73) Patentinhaber: Rittal Rudolf Loh GmbH & Co. KG, 35745 Herborn (DE)
(72) Erfinder: Kräuter, Thomas, 35619 Braunfels (DE)
(74) Vertreter: Fleck, Hermann-Josef, Dr.-Ing.

(56) Entgegenhaltungen:
- DE-A- 19 748 985
- US-A- 4 280 335
- US-A- 4 769 998
- US-A- 5 491 982
- PATENT ABSTRACTS OF JAPAN vol. 1999, no. 04, 30. April 1999 (1999-04-30) & JP 11 014222 A (TOYO ENG WORKS LTD), 22. Januar 1999 (1999-01-22)

## Beschreibung

Die Erfindung betrifft eine Kühleinrichtung für eine Werkzeugmaschine oder dergleichen gemäß dem Oberbegriff des Anspruchs 1. Eine solche Kühleinrichtung ist aus JP 11014222 bekannt.

Solche Kühleinrichtungen werden beispielsweise verwendet um das Maschinenbett von Präzisionsdreh- oder Fräsmaschinen zu kühlen. Das Maschinenbett wird mittels der Temperiereinrichtung auf einer Temperatur gehalten, die der Umgebungstemperatur entspricht. Dabei darf die Abweichung zwischen der Umgebungstemperatur und der Temperatur in der Temperiereinrichtung nur sehr gering sein vorzugsweise darf die Abweichung 2/10 - 3/10 Grad Celsius betragen. Derzeit wird bei solchen Kühleinrichtungen ein Kreislaufsystem verwendet, in dem ein Kühlmedium zirkuliert. Die Temperatur des Kühlmediums ist dabei so gewählt, dass in der Temperiereinrichtung möglichst die Umgebungstemperatur erreicht wird. Wenn nun die Temperatur im Kreislaufsystem einen unzulässig hohen Wert erreicht, so erkennt dies der Regler. Der Regler steuert dann die Dosiereinheit, wozu externes Kühlmedium in den Vorlauf, also vor der Werkzeugmaschine, in das Kreislaufsystem eindosiert wird. Das externe Kühlmedium hat dabei eine niedrigere Temperatur als das im Kreislaufsystem geführte Kühlmedium. Bei dieser Art der Kühlung wird eine kurzzeitige massive Temperaturunterschreitung im Vorlauf bewirkt, was einen Temperatursturz in der Temperiereinrichtung mit sich bringt.

Es ist Aufgabe der Erfindung, eine Kühleinrichtung der eingangs erwähnten Art zu schaffen, mittels der ein dauerhaft konstantes Temperaturniveau in der Temperiereinrichtung gehalten werden kann.

Diese Aufgabe wird durch die Merkmale des Anspruchs 1 gelöst.

Wenn nun eine unzulässige Überschreitung des Temperaturniveaus in dem Kreislaufsystem erkannt wird, so wird das kalte externe Kühlmedium in den Rücklauf eindosiert und kann sich anschließend im Puffertank mit dem im Kreislaufsystem geführten Kühlmedium mischen, wodurch ein gleichmäßiges Temperaturniveau entsteht. Hierdurch wird ein Temperatursturz in der Temperiereinrichtung zuverlässig verhindert.

Mit dem Kältekreislauf ist sichergestellt, dass stets ausreichend externes Kühlmedium an der Dosiereinheit ansteht.

Zur Schaffung eines autarken, in sich geschlossenen Systemes sieht eine mögliche Erfindungsausgestaltung vor, dass dem Puffertank ein Teiltank zugeordnet ist, wobei der Puffertank mit dem Teiltank über einen Überlauf verbunden ist, und dass durch den Teiltank ein Kühlkreislauf geführt ist, der über die Dosiereinheit in Verbindung mit dem Kreislaufsystem steht. Bei Verwendung eines Kältekreislaufes zur Kühlung des externen Kühlmediums kann es vorgesehen sein, dass die Temperatur des externen Kühlmediums im Kühlkreislauf mittels eines Temperaturfühlers überwacht ist, und dass der Temperaturfühler Teil einer Regelschaltung ist, die den Kompressor des Kältekreislaufes bei einer Temperaturunterschreitung unter einen Soll-Wert aktiviert und bei Überschreitung eines Vorgabewertes abschaltet. Mit dieser Regelschaltung wird ein eniergiesparender Betrieb des Kältekreislaufes bewirkt.

Bevorzugterweise weist das Kreislaufsystem einen Wärmetauscher auf, mittels dem ein Verbraucher kühlbar ist. Als Verbraucher kann beispielsweise eine Maschinensteuerung eingesetzt sein, die letztendlich zur Steuerung der zu kühlenden Werkzeugmaschine dient. Auf diese Weise wird mittels einer einzigen Kühleinrichtung eine Komplettkühlung der gesamten Werkzeugmaschine zur Verfügung gestellt.

Eine bevorzugte Erfindungsausgestaltung kann dadurch gekennzeichnet sein, dass an den Regler ein der Temperiereinrichtung zugeordneter Umgebungs-Temperaturfühler und ein im Kühlmedium des Puffertankes angeordneter Puffertank-Temperaturfühler angeschlossen ist, dass der Regler eine Regelschaltung aufweist, die die Differenztemperatur zwischen dem Umgebungs- und dem Puffertemperaturfühler bildet und in Abhängigkeit des erhaltenen Differenzwertes die Dosiereinheit steuert. Der Umgebungs-Temperaturfühler kann dabei so angeordnet sein, dass er in der unmittelbaren Nähe der Temperierungseinrichtung angeordnet ist und dort die Umgebungslufttemperatur misst.

Bevorzugterweise ist die Dosiereinheit als Magnetventil ausgebildet, dass ausgehend vom Regler getaktet öffen- bzw. schließbar ist.

Zur Verringerung des Teileaufwandes ist es vorgesehen, das der Puffertank und der Teiltank von einem gemeinsamen Tank gebildet werden und über eine Schottwand voneinander abgeteilt sind, wobei die Schottwand den Überlauf bildet.

Bei der vorliegenden Anordnung sollte der Regler zur Verringerung des Teileaufwandes dazu verwendet werden die Temperatur des externen Kühlmediums auf eine niedrigere Temperatur als die Temperatur des im Kreislaufsystem befindlichen Kühlmediums einzuregeln.

Aus Gründen der Betriebssicherheit wird bei einer möglichen Erfindungsausgestaltung die Strömung im Kühlkreislauf mittels eines Strömungswächters überwacht.

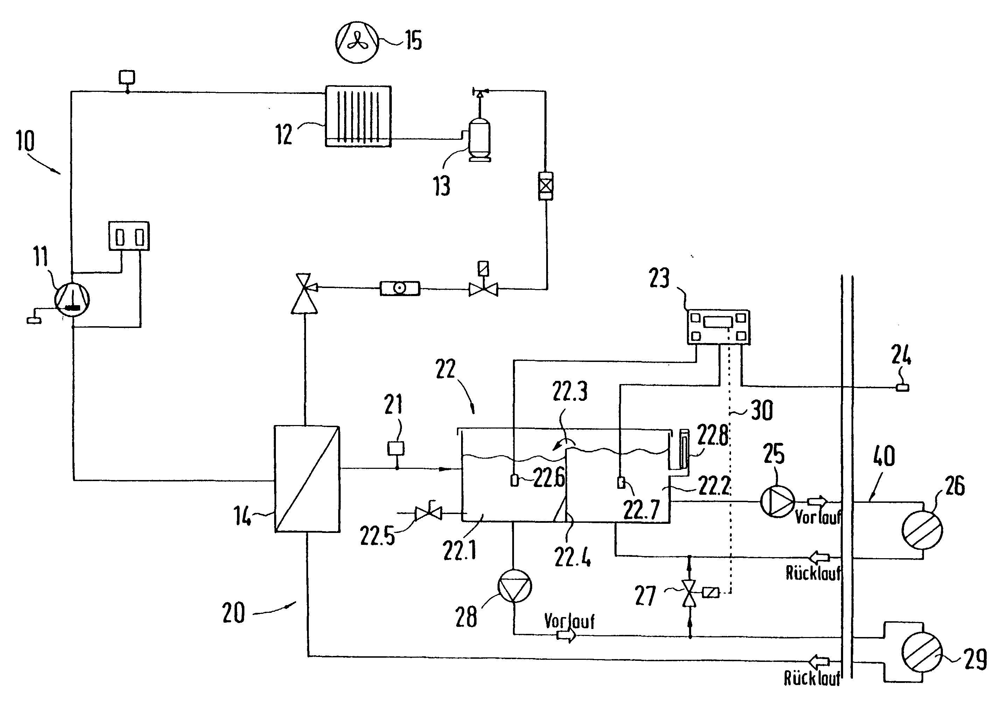

Die Erfindung wird im Folgenden anhand eines in der Zeichnung dargestellten Ausführungsbeispieles näher erläutert. Die Zeichnung zeigt einen Schemaplan einer Kühleinrichtung.

Die Kühleinrichtung weist im Wesentlichen drei Kreisläufe auf. Zum einen ist dies ein Kältekreislauf 10, zum anderen ein Kühlkreislauf 20 und weiterhin ein Kreislaufsystem 40.

Der Kältekreislauf 10 weist die üblichen Komponenten, unter anderem einen Kompressor 11, einen Verflüssiger 12, einen Sammler 13, einen Verdampfer 14 und einen Lüfter 15 auf. Die Funktionsweise eines solchen Kältekreislaufes ist allgemein bekannt, so dass hier nicht näher darauf eingegangen werden muss. Der Kältekreislauf steht über den Verdampfer 14 in Verbindung mit dem Kühlkreislauf 20. Über den Verdampfer 14 wird somit die in dem Kältekreislauf 10 erzeugte Kühlenergie auf das im Kühlkreislauf 20 zirkulierende Kühlmedium übertragen. Im Folgenden wird dieses Kühlmedium externes Kühlmedium genannt. Ausgehend vom Verdampfer 14 fließt das externe Kühlmedium an einem Strömungswächter 21 vorbei, der permanent den Fluß des Kühlkreislaufes 20 überwacht. Im Anschluß an den Strömungswächter 21 gelangt das externe Kühlmedium in einen Teiltank 22.1 eines Speichers 22. Der Speicher 22 ist als Kunststofftank ausgebildet. Im Anschluß an den Teiltank 22.1 wird das externe Kühlmedium über eine Pumpe 28 in einen Vorlauf eingepumpt und einem Ver-braucher 29 zugeführt. Im vorliegenden Fall ist der Verbraucher 29 eine Präzisionsfräsmaschine. Hier wird die von dem Kühlkreislauf bereitgestellte Kälteleistung in der Steuerschaltung der Werkzeugmaschine benötigt. Nach dem Verbraucher 29 fließt das externe Kühlmedium wieder über den Rücklauf dem Verdampfer 14 zu, womit der Kühlkreislauf 20 geschlossen wäre. Der Speicher 22 weist neben dem Teiltank 22.1 auch noch einen Puffertank 22.2 auf. Zur Ausbildung des Teiltankes 22.1 und des Puffertankes 22.2 ist der Speicher 22 mittels einer Schottwand 22.4 in zwei Teilkammern unterteilt. Die Schottwand 22.4 ist dabei so dimensioniert, dass sie einen Überlauf 22.3 zwischen dem Teiltank 22.1 und dem Puffertank 22.2 bildet. Zur Befüllung des Speichers ist eine Füllarmatur 22.8 verwendet. Wenn der Speicher 22 entleert werden soll, so wird ein Ablaßventil 22.5 verwendet.

Das oben erwähnte Kreislaufsystem 40 durchsetzt den Puffertank 22.2. Ausgehend vom Puffertank 22.2 wird das im Puffertank 22.2 bevorratete Kühlmedium über eine Pumpe 25 in einen Vorlauf eingefördert. Über diesen Vorlauf fließt das Kühlmedium einer Temperiereinrich-tung der vorstehend erwähnten Werkzeugmaschine zu. Die Temperiereinrich-tung kann dabei dem Maschinenbett der Werkzeugmaschine zugeordnet sein. Sie dient dazu das Maschinenbett auf exakt dem Umgebungstemperaturniveau zu halten. Im Anschluß an die Temperiereinrichtung 26 fließt das Kühlmedium wieder über den Rücklauf dem Puffertank 22.2 zu. Damit ist das Kreislauf-system 40 geschlossen.

Zwischen dem Kühlkreislauf 20 und dem Kreislaufsystem 40 ist eine Dosiereinheit 27 in Form eines Magnetventiles eingebaut. Diese Dosiereinheit 27 verbindet den Vorlauf des Kühlkreislaufes 20 mit dem Rücklauf des Kreislaufsystemes.

Die Kühleinrichtung weist auch einen Regler 23 auf, der verschiedene Funktionen hat. Zu einen dient er dazu eine Differenzwert-Temperaturregelung durchzuführen. Diese Differenzwert-Temperaturregelung würde unter zur Hilfenahme eines Puffertank-Temperaturfühlers 22.7 und eines Umgebungs-Temperaturfühlers 24 durchgeführt. Der Puffertank-Temperaturfühler 22.7 ist dabei im Kühlmedium des Puffertankes 22.2 angeordnet. Der Umgebungs-Temperaturfühler 24 ist in der Werkzeugmaschine zugeordnet. Der Regler 23 bildet die Tem-peraturdifferenz zwischen diesen beiden Temperaturfühlern 22.7 und 24. Für den Fall, dass die gebildete Differenz der beiden Temperaturwerte einen Soll-Wert überschreitet, wird über eine Steuerleitung 30 die Dosiereinheit 27 ange-steuert. Der dabei ausgesandte Steuerimpuls veranlaßt die Dosiereinheit 27 dazu eine räumliche Verbindung zwischen dem Kühlkreislauf 20 und dem Kreislaufsystem 40 herzustellen. Dabei gelangt dann externes Kühlmedium des Kühlkreislaufes 20 in den Rücklauf des Kreislaufsystemes 40. Das eindosierte externe Kühlmedium wird zusammen mit dem Kühlmedium des Kreislaufsystemes 40 in den Puffertank 22.2 gefördert. Dort können die beiden Kühlmedien sich vermischen und einen Temperaturausgleich untereinander herstellen. Dadurch, dass ein Temperaturausgleich im Puffertank 22.2 stattfindet, kann eine kontinuierliche Abkühlung der Temperiereinrichtung 26 erreicht werden. Wenn die Differenztemperaturmessung ergibt, dass sich die gemessene Differenztemperatur wieder unterhalb des Soll-Wertes befindet, wird die Dosiereinheit 27 wieder zum Schließen veranlaßt.

Damit der Kältekreislauf 10 nicht auf einem Dauer-Betriebszustand gehalten werden muss, ist der Regler 23 über eine, in der Zeichnung nicht dargestellte Steuerleitung mit dem Kompressor 11 verbunden. Unter zur Hilfenahme eines im externen Kühlmedium des Teiltankes 22.1 angeordneten Temperaturfühlers 22.6 wird eine Festwertregelung durchgeführt. Dabei wird die Temperatur des externen Kühlmediums gemessen und mit einem Soll-Wert verglichen. Bei Überschreiten dieses Soll-Wertes wird der Kompressor 11 von dem Regler 23 angeschalten. Der Kältekreislauf 10 erzeugt dann so lange Kälteleistung, bis die am Temperaturfühler 22.6 anstehende Temperatur wieder einen Vorgabewert unterschreitet.

## Patentansprüche

1. Kühleinrichtung für eine Werkzeugmaschine oder dergleichen mit einem Kreislaufsystem (40), in dem ein Kühlmedium zirkuliert, wobei das Kühlmedium einer Temperiereinrichtung (26) der Werkzeugmaschine zuführbar ist, wobei dem Kreislaufsystem (40) eine Dosiereinheit (27) zugeordnet ist, mittels der externes Kühlmedium dem im Kreislaufsystem (40) zirkulierenden Kühlmedium zudosierbar ist, wobei die Dosiereinheit (27) über einen Regler (23) steuerbar ist, und wobei das Kreislaufsystem (40) einen Puffertank (22.2) aufweist, durch den das Kühlmedium geleitet ist, **dadurch gekennzeichnet,**
**dass** die Dosiereinheit (27) das externe Kühlmedium in den von der Temperiereinrichtung (26) kommenden Rücklauf und vor dem Puffertank (22.2) in das Kreislaufsystem (40) eindosiert,
**dass** die Kühleinrichtung einen Kältekreislauf (10) aufweist, an dessen Verdampfer (14) ein Kühlkreislauf (20) angekoppelt ist, in dem das externe Kühlmedium geleitet ist, und
**dass** mittels der Dosiereinheit (27) eine Verbindung zwischen dem Kühlkreislauf (20) und dem Kreislaufsystem (40) herstellbar ist.

2. Kühleinrichtung nach Anspruch 1,
**dadurch gekennzeichnet,**
**dass** dem Puffertank (22.2) ein Teiltank (22.1) zugeordnet ist, wobei der Puffertank (22.2) mit dem Teiltank (22.1) über einen Überlauf (22.3) verbunden ist, und
**dass** durch den Teiltank (22.1) ein Kühlkreislauf (20) geführt ist, der über die Dosiereinheit (27) in Verbindung mit dem Kreislaufsystem (40) steht.

3. Kühleinrichtung nach Anspruch 1 oder 2,
**dadurch gekennzeichnet,**
**dass** die Temperatur des externen Kühlmediums ein Kühlkreislauf (20) mittels eines Temperaturfühlers (22.6) überwacht ist, und
**dass** der Temperaturfühler (22.6) Teil einer Regelschaltung ist, die den Kompressor (11) des Kältekreislaufes (10) bei einer Temperaturunterschreitung unter einen Soll-Wert aktiviert und bei Überschreitung eines Vorgabewertes abschaltet.

4. Kühleinrichtung nach Anspruch 3,
**dadurch gekennzeichnet,**
**dass** der Kühlkreislauf (20) einen Wärmetauscher aufweist mittels dem ein Verbraucher (29) kühlbar ist.

5. Kühleinrichtung nach einem der Ansprüche 1 bis 4,
**dadurch gekennzeichnet,**
**dass** an den Regler (23) ein der Temperiereinrichtung (26) zugeordneter Temperaturfühler (24) und ein im Kühlmedium des Puffertankes (22.2) angeordneter Puffertank-Temperaturfühler (22.7) angeschlossen ist,
**dass** der Regler (23) eine Regelschaltung (30) aufweist, die die Differenztemperatur zwischen dem Umgebungs- und dem Puffertank-Temperaturfühler (22.7 und 24) bildet und in Abhängigkeit des erhaltenen Differenzwertes die Dosiereinheit (27) steuert.

6. Kühleinrichtung nach einem der Ansprüche 1 bis 5,
**dadurch gekennzeichnet,**
**dass** die Dosiereinheit (27) ein Magnetventil ist.

7. Kühleinrichtung nach einem der Ansprüche 2 bis 6,
**dadurch gekennzeichnet,**
**dass** der Puffertank (22.2) und der Teiltank von einem gemeinsamen Tank gebildet werden und über eine Schottwand (22.4) voneinander abgeteilt sind, wobei die Schottwand (22.4) den Überlauf (22.3) bildet.

8. Kühleinrichtung nach einem der Ansprüche 2 bis 6,
**dadurch gekennzeichnet,**
**dass** der Regler (23) die Temperatur des externen Kühlmediums auf eine niedrigere Temperatur einregelt als die Temperatur des im Kreislaufsystem (40) befindlichen Kühlmediums.

9. Kühleinrichtung nach einem der Ansprüche 1 bis 8,
**dadurch gekennzeichnet,**
**dass** die Strömung im Kühlkreislauf (20) mittels eines Strömungswächters (21) überwacht ist.

## Claims

1. Cooling apparatus for a machine tool or the like, having a circulation system (40) in which a cooling medium circulates, it being possible for the cooling medium to be fed to a temperature-regulating device (26) of the machine tool, a metering unit (27) being assigned to the circulation system (40), by means of which metering unit (27) external cooling medium can be fed in a metered manner to the cooling medium circulating in the circulation system (40), the metering unit (27) being controllable via a regulator (23), and the circulation system (40) having a buffer tank (22.2) through which the cooling medium is directed, **characterized in that** the metering unit (27) feeds the external cooling medium in a metered manner into the return coming from the temperature-regulating device (26) and upstream of the buffer tank (22.2) into the circulation system (40), **in that** the cooling apparatus has a refrigeration circuit (10), coupled to the compressor (14) of which is a cooling circuit (20) in which the external cooling medium is directed, and **in that** a connection can be produced between the cooling circuit (20) and the circulation system (40) by means of the metering unit (27).

2. Cooling apparatus according to Claim 1, **characterized in that** a sectional tank (22.1) is assigned to the buffer tank (22.2), the buffer tank (22.2) being connected to the sectional tank (22.1) via an overflow (22.3), and **in that** a cooling circuit (20) is passed through the sectional tank (22.1), this cooling circuit (20) being connected to the circulation system (40) via the metering unit (27).

3. Cooling apparatus according to Claim 1 or 2, **characterized in that** the temperature of the external cooling medium in the cooling circuit (20) is monitored by means of a temperature sensor (22.6), and **in that** the temperature sensor (22.6) is part of a regulating circuit which activates the compressor (11) of the refrigeration circuit (10) if the temperature drops below a desired valve and switches off said compressor (11) if a specified value is exceeded.

4. Cooling apparatus according to Claim 3, **characterized in that** the cooling circuit (20) has a heat exchanger, by means of which a consumer (29) can be cooled.

5. Cooling apparatus according to one of Claims 1 to 4, **characterized in that** an ambient temperature sensor (24) assigned to the temperature-regulating device (26) and a buffer-tank temperature sensor (22.7) arranged in the cooling medium of the buffer tank (22.1) are connected to the regulator (23), **in that** the regulator (23) has a regulating circuit (30) which forms the differential temperature between the ambient temperature sensor and the buffer-tank temperature sensor (22.7 and 24) and controls the metering unit (27) as a function of the differential value obtained.

6. Cooling apparatus according to one of Claims 1 to 5, **characterized in that** the metering unit (27) is a solenoid valve.

7. Cooling apparatus according to one of Claims 2 to 6, **characterized in that** the buffer tank (22.2) and the sectional tank are formed by a common tank and are divided off from one another by a bulkhead partition (22.4), the bulkhead partition (22.4) forming the overflow (22.3).

8. Cooling apparatus according to one of Claims 2 to 6, **characterized in that** the regulator (23) regulates the temperature of the external cooling medium to a lower temperature than the temperature of the cooling medium located in the circulation system (40).

9. Cooling apparatus according to one of Claims 1 to 8, **characterized in that** the flow in the cooling circuit (20) is monitored by means of a flow monitor (21).

## Revendications

1. Dispositif de refroidissement pour une machine-outil ou une machine similaire avec un système de circulation en boucle (40), dans lequel circule un agent réfrigérant, l'agent réfrigérant pouvant être amené à une installation de contrôle de température (26) de la machine-outil, une unité de dosage (27) étant affectée au système de circulation en boucle (40), au moyen de laquelle de l'agent réfrigérant externe peut être dosé et ajouté à l'agent réfrigérant circulant dans le système de circulation en boucle (40), l'unité de dosage (27) pouvant être commandée par un régulateur (23), et le système de circulation en boucle (40) étant muni d'un réservoir tampon (22.2) par lequel passe l'agent réfrigérant,
**caractérisé en ce que**
l'unité de dosage (27) dose et ajoute l'agent réfrigérant externe dans le système de circulation en boucle (40) au niveau du retour venant de l'installation de contrôle de température (26) et en amont du réservoir tampon (22.2),
**en ce que** le dispositif de refroidissement possède un circuit frigorifique (10), sur l'évaporateur (14) duquel est couplé un circuit de refroidissement (20) dans lequel circule l'agent réfrigérant externe, et
**en ce qu'**une liaison peut être réalisée au moyen de l'unité de dosage (27) entre le circuit de refroidissement (20) et le système de circulation en boucle (40).

2. Dispositif de refroidissement selon la revendication 1,
**caractérisé en ce que**
un réservoir partiel (22.1) est adjoint au réservoir tampon (22.2), le réservoir tampon (22.2) étant relié avec le réservoir partiel (22.1) par le biais d'un déversoir (22.3), et
**en ce qu'**un circuit de refroidissement (20), relié au système de circulation en boucle (40) par le biais de l'unité de dosage (27), passe par le réservoir partiel (22.1).

3. Dispositif de refroidissement selon la revendication 1 ou 2,
**caractérisé en ce que**
la température de l'agent réfrigérant externe est surveillée par le biais d'une sonde de température (22.6) dans le circuit de refroidissement (20), et **en ce que** la sonde de température (22.6) fait partie d'un circuit de régulation qui active le compresseur (11) du circuit frigorifique (10) lorsque la température passe en dessous d'une valeur de consigne et qui l'arrête en cas de dépassement d'une valeur prescrite.

4. Dispositif de refroidissement selon la revendication 3,
**caractérisé en ce que**
le circuit de refroidissement (20) est muni d'un échangeur de chaleur qui permet de refroidir un consommateur (29).

5. Dispositif de refroidissement selon l'une des revendications 1 à 4,
**caractérisé en ce que**
une sonde de température (24) affectée à l'installation de contrôle de température (26) et une sonde de température du réservoir tampon (22.7) disposée dans l'agent réfrigérant du réservoir tampon (22.2) sont reliées au régulateur (23),
**en ce que** le régulateur (23) possède un circuit de régulation (30) formant la température différentielle entre la sonde de température d'ambiance et la sonde de température du réservoir tampon (22.7 et 24) et commande l'unité de dosage (27) en fonction de la valeur différentielle obtenue.

6. Dispositif de refroidissement selon l'une des revendications 1 à 5,
**caractérisé en ce que**
l'unité de dosage (27) est une électrovanne.

7. Dispositif de refroidissement selon l'une des revendications 2 à 6,
**caractérisé en ce que**
le réservoir tampon (22.2) et le réservoir partiel sont formés par un réservoir commun et sont séparés l'un de l'autre par une cloison (22.4), la cloison (22.4) formant le déversoir (22.3).

8. Dispositif de refroidissement selon l'une des revendications 2 à 6,
**caractérisé en ce que**
le régulateur (23) régule la température de l'agent réfrigérant externe à une température inférieure à la température de l'agent réfrigérant présent dans le système de circulation en boucle (40).

9. Dispositif de refroidissement selon l'une des revendications 1 à 8,
**caractérisé en ce que**
l'écoulement dans le circuit de refroidissement (20) est surveillé par le biais d'un contrôleur d'écoulement (21).
